# EUROPÄISCHE PATENTANMELDUNG

(11) **EP 4 458 547 A1**
(43) Veröffentlichungstag der Anmeldung: **06.11.2024**
(21) Anmeldenummer: 24173625.5
(22) Anmeldetag: 30.04.2024
(51) Int. Cl.: B29C 45/67, B29C 45/68

(54) **FORMSCHLIESSEINHEIT UND VERFAHREN ZUM BETREIBEN EINER FORMSCHLIESSEINHEIT EINER MASCHINE ZUR VERARBEITUNG VON KUNSTSTOFFEN**

(30) Priorität: 05.05.2023 DE 102023111739
(71) Anmelder: Arburg GmbH + Co KG, 72290 Loßburg (DE)
(72) Erfinder: BLETSCHER, Rainer, 72270 Baiersbronn (DE); SCHILLI, Christoph, 77781 Biberach (DE)
(74) Vertreter: RPK Patenanwälte Reinhardt und Kaufmann Partnerschaft mbB (Pforzheim)

(57) **Zusammenfassung**

Eine Formschließeinheit (10) für eine Maschine (100) zur Verarbeitung von Kunststoffen und anderer plastifizierbarer Massen weist eine erste Formaufspannplatte (12), eine Abstützplatte (18), eine bewegliche Formaufspannplatte (14), wenigstens einen Antrieb (16) und wenigstens eine Hydraulikeinheit auf, wobei der Antrieb (16) oder der Antrieb (16) und die Hydraulikeinheit die bewegliche Formaufspannplatte (14) bewegen und die Hydraulikeinheit wenigstens einen Druck auf die bewegliche Formaufspannplatte (14) aufbringt. In der Abstützplatte (18) ist wenigstens ein Hydraulikkolben (20) der Hydraulikeinheit angeordnet ist, in dem wenigstens ein Element (24) des Antriebs (16) drehbar und/oder bewegbar angeordnet ist, welches mit wenigstens einem Bewegungselement (22) des Antriebs (16) zusammenwirkt, das mit der beweglichen Formaufspannplatte (14) verbunden ist. Die Abstützplatte (18) weist wenigstens eine mit dem wenigstens einen Element (24) zusammenwirkende Arretierung (26) auf.

## Beschreibung

### Gebiet der Erfindung

Die vorliegende Erfindung betrifft eine Formschließeinheit für eine Maschine zur Verarbeitung von Kunststoffen und anderer plastifizierbarer Massen, insbesondere für eine Spritzgießmaschine nach dem Oberbegriff des Anspruchs 1 sowie ein Verfahren zum Betreiben einer Formschließeinheit einer Maschine zur Verarbeitung von Kunststoffen und anderer plastifizierbarer Massen, insbesondere einer Spritzgießmaschine nach dem Oberbegriff des Anspruchs 11.

Wenn hiervon "Werkzeug" oder "Form" die Rede ist, handelt es sich um ein Spritzgießwerkzeug oder eine Spritzgießform, wie sie üblicherweise zwischen den Formträgern einer Spritzgießeinheit einer Maschine zur Verarbeitung von Kunststoffen aufgenommen wird. Die Begriffe "Werkzeug", "Form", "Spritzgießwerkzeug" oder "Spritzgießform" werden daher synonym verwendet.

### Stand der Technik

In der Industrie werden zur Herstellung präziser Formteile aus Kunststoff in der Regel Maschinen zur Verarbeitung von Kunststoffen und anderer plastifizierbarer Massen, wie zum Beispiel Spritzgießmaschinen verwendet, welche wenigstens eine Spritzgießeinheit, welche das Material aufschmilzt, homogenisiert und in einen Formhohlraum einer Spritzgießform einspritzt, sowie wenigstens eine Formschließeinheit aufweisen, welche die Spritzgießform schließt und den für das Formteil notwendigen Druck aufbringt.

Beispielsweise kommen in einem Schließkraftbereich bis 2000kN sowohl im elektrischen als auch im hybriden Spritzgießmaschinensegment überwiegend 5-Punkt-Kniehebelsysteme zur Anwendung. Die Kniehebelsysteme werden in der Regel mit vier Strängen ausgeführt, welche zwischen dem beweglichen Formträger und dem Abstützträger platziert sind. Die Hauptstränge werden über einen Kreuzkopf mit Hilfs- bzw. Punktstellhebeln verbunden und mittels eines Antriebs, zum Beispiel einem Elektromotor und einer Spindel horizontal bewegt. Beim Einsatz von 5-Punkt-Kniehebelsystemen kann der Antrieb in der hinteren (geöffneten) Position infolge der Übersetzung hohe Geschwindigkeitsprofile für den beweglichen Werkzeugträger erreichen, wohingegen in der vorderen (geschlossenen) Position der Werkzeugträger langsam die Werkzeughälfte fügt und die erforderliche Schließkraft über das Durchstrecken der Kniehebel aufbaut. Diese kinematischen Randbedingungen sind im Stand der Technik bekannt und werden weltweit für die eingebaute Werkzeugtechnik genutzt. Beispielsweise ist in der DE 10 2015 109 840 B3 eine Kniehebel-Schließeinheit offenbart, wobei ein mit einem Kniehebelmechanismus in Wirkverbindung stehender Kreuzkopf mit einem elektrischen Antrieb verfahren wird.

Der Nachteil dieser Ausführungsvarianten liegt im hohen Einsatz von erforderlichen Komponenten wie den Haupt- und Hilfshebeln, den zugehörigen Drehgelenken und der Formhöhenverstellung zur Anpassung der Werkzeughöhe auf die variierenden Werkzeughöhen. All diese Komponenten sind zudem hoch belastet, benötigen Schmierungs- und Wartungsaufwand und unterliegen Verschleiß.

Die DE 93 20 508 U1 beschreibt eine Spritzgießmaschine mit einer ortsfesten und einer bewegbaren Formträgerplatte sowie mit einem Schließmechanismus. Dabei ist die ortsfeste Formträgerplatte an oberen Armen zweiarmiger Hebel montiert, die über Zugstreben mit gegenwirkenden zweiarmigen Hebeln verbunden sind. Eine Zylinderplatte ist an den oberen Armen der zweiarmigen Hebel montiert. Zwischen den unteren Armen der zweiarmigen Hebel ist mindestens eine starre Druckstrebe angeordnet, die mit den zweiarmigen Hebeln verbunden ist und der Kraft des Schließmechanismus entgegenwirkt, der sich an der Zylinderplatte abstützt.

In der DE 22 06 305 A1 ist eine Formschließeinrichtung für thermoplastische Massen verarbeitende Maschinen offenbart. Sie weist einen ortsfest auf einem Gestell der Maschine angeordneten, düsenseitigen Formträger und einen auf zwischen ortsfestem Formträger und einer Widerlagerplatte angebrachten Säulen verschiebbar geführten Formträger auf. Der verschiebbar geführte Formträger ist über ein mit der Widerlagerplatte verbundenes Arbeitsglied bei geringem Kraftaufwand in Schließ- und Öffnungsstellung bewegbar, dessen Haltekraft in der Schließstellung von einem an der Widerlagerplatte anliegenden Druckglied aufgebracht wird. Dabei sind die Abstützung des Arbeitsgliedes und die Abstützung des Druckgliedes in Richtung auf den ortsfesten Formträger und zurück verlagerbar.

Aus der DE 10 2015 109 840 B3 ist eine Kniehebel-Schließeinheit für eine Spritzgießmaschine bekannt, die eine feststehende Formaufspannplatte, eine bewegliche Formauf spannplatte, eine Abstützplatte und einen zwischen der Abstützplatte und der beweglichen Formaufspannplatte angeordneten und in Wirkverbindung stehenden Kniehebelmechanismus umfasst. Sie hat einen mit dem Kniehebelmechanismus in Wirkverbindung stehenden und entlang der Maschinenlängsachse verfahrbaren Kreuzkopf und wenigstens einen elektrischen Antrieb zum Verfahren des Kreuzkopfs. Zusätzlich zu dem elektrischen Antrieb ist mindestens ein hydraulischer Antrieb vorgesehen, mit dem ein Verfahren des Kreuzkopfes entlang der Maschinenlängsachse erzeugbar ist. Der hydraulische Antrieb weist ein mit Kolbenzylindersystem auf. Die Länge eines Zylinders und die Länge einer Kolbenstange sind so aufeinander abgestimmt, dass der hydraulische Antrieb den Verfahrweg des Kreuzkopfs beim Verfahren der beweglichen Formaufspannplatte zwischen einer Offenstellung der Schließeinheit, in welcher der Kniehebelmechanismus eingeklappt ist, und einer Schließstellung, in welcher sich der Kniehebelmechanismus in einer vorgebbaren Strecklage befindet und eine Schließkraft aufgebaut ist, mitmachen kann.

Die DE 17 29 156 B1 offenbart eine Formschließeinrichtung für Spritzgießmaschinen, insbesondere zur Verarbeitung von Kunststoffen. Sie weist eine mit einer gegenüber einer ersten Formträgerplatte durch eine hydraulische Verschiebeeinrichtung bewegbare zweite Formträgerplatte auf, die gegenüber einer ortsfesten Stützplatte über eine Formzuhalte- und Verriegelungsvorrichtung mit Formzuhaltekolben, Druckstange und steuerbaren, quer zur Formbewegungsrichtung bewegbaren Kupplungsgliedern abstützbar ist. An dem der ortsfesten Stützplatte zugeordneten Formzuhaltekolben, der als Ringkolben ausgebildet eine an der bewegbaren Formträgerplatte befestigte Druckstange umgibt, ist wenigsten ein steuerbares Kupplungsglied quer zur Formbewegungsrichtung schwenkbar oder verschiebbar gelagert. Dem Kupplungsglied ist zur Abstützung ein Anschlag an der jeweils zugehörigen Druckstange zugeordnet.

In der DE 19 10 459 A1 ist eine Formschließ- und Formzuhaltevorrichtung für Kunststoff verarbeitende Spritzgießmaschinen oder Pressen offenbart. Sie besteht aus zwei während des Arbeitsablaufs feststehenden, durch Holme verbundene Trägerplatten und mindestens eine auf den Holmen verschiebbare Formaufspannplatte, die mit Hilfe von Antriebsmitteln in Formöffnungs- bzw. Schließstellung bewegbar ist. Eine die Schließkraft erzeugende kurzhubige Kolben-Zylinder-Einheit ist in der Formschließstellung über einen Stützkörper zwischen einer Trägerplatte und der verschiebbaren Formaufspannplatte abgestützt gehalten. Die kurzhubige Kolben-Zylinder-Einheit und/oder der Stützkörper sind für den Formöffnungsvorgang entfernbar. Die kurzhubige Kolben-Zylinder-Einheit ist in der feststehenden Trägerplatte geführt angeordnet und bildet zusammen mit dem Stützkörper eine Baueinheit, die ganz oder teilweise axial aus dem Bewegungsbereich der Formaufspannplatte bewegbar ist. Dabei ist die kurzhubige Kolben-Zylinder-Einheit in Formschließstellung gegenüber der feststehenden Trägerplatte über Verriegelungsmittel abgestützt gehalten.

### Zusammenfassung der Erfindung

Ausgehend von diesem Stand der Technik liegt der vorliegenden Erfindung die Aufgabe zugrunde, eine Formschließeinheit bereitzustellen, welche im Hinblick auf Wartung und Verschleiß einen reduzierten Aufwand benötigt und einen einfachen Aufbau hat.

Diese Aufgabe wird durch eine Formschließeinheit mit den Merkmalen des Anspruchs 1 sowie durch ein Verfahren zum Betreiben einer Formschließeinheit mit den Merkmalen des Anspruchs 11 gelöst.

Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Die Formschließeinheit für eine Maschine zur Verarbeitung von Kunststoffen und anderer plastifizierbarer Massen, insbesondere für eine Spritzgießmaschine, weist eine erste Formaufspannplatte, bevorzugt eine stationäre Formaufspannplatte, eine Abstützplatte, eine bewegliche Formaufspannplatte, wenigstens einen Antrieb, z.B. einen hydraulischen Antrieb oder bevorzugt einen elektrischen Antrieb, z.B. einen Spindelantrieb oder einen Zahnstangenantrieb, und wenigstens eine Hydraulikeinheit auf, wobei der Antrieb oder der Antrieb und die Hydraulikeinheit die bewegliche Formaufspannplatte bewegen, z.B. bei einem Öffnen und/oder Schließen der Formschließeinheit. Die Hydraulikeinheit bringt wenigstens einen Druck, bevorzugt einen Hochdruck, auf die bewegliche Formaufspannplatte auf. Für eine vorteilhafte Minimierung des Wartungsaufwands und des Verschlei-βes sowie für einen einfachen Aufbau der Formschließeinheit ist in der Abstützplatte wenigstens ein Hydraulikkolben der Hydraulikeinheit angeordnet, in dem wenigstens ein Element des Antriebs, z.B. eine Spindelmutter oder ein Zahnstangengetriebe drehbar und/oder bewegbar angeordnet ist, welches mit wenigstens einem Bewegungselement des Antriebs, z.B. einer Spindel oder einer Zahnstange, zusammenwirkt, das mit der beweglichen Formaufspannplatte verbunden ist, und die Abstützplatte weist wenigstens eine mit dem wenigstens einen Element zusammenwirkende Arretierung auf.

Prinzipiell denkbar ist auch, dass beide Formaufspannplatten beweglich sind und sich jeweils an entsprechenden Abstützplatten oder an einer Abstützplatte abstützen. Die Abstützplatten können jeweils wie oben beschrieben aufgebaut sein. Wenn z.B. das Element des Antriebs der ersten Abstützplatte mit der entsprechenden Arretierung zusammenwirkt und die erste Formaufspannplatte gesichert oder z.B. durch eine Verriegelungsvorrichtung verriegelt ist und der Hydraulikkolben in der anderen (zweiten) Abstützplatte dann mit Druck beaufschlagt wird, würde die zweite Formaufspannplatte gegen die erste Formaufspannplatte drücken, welche dann genau genommen als stationäre Formaufspannplatte anzusehen wäre. Letztlich muss die bewegliche Formaufspannplatte gegen eine andere Formaufspannplatte zum Schließen einer dazwischen aufgenommenen Spritzgießform gedrückt werden können. Vorteilhaft ergibt sich so eine flexible Positionierung des Werkzeugs, welches über einen weiten Bereich eingestellt werden kann.

Zweistufige Systeme sind aus dem Bereich der Zwei-Platten-Technologie bekannt, wobei nach Beendigung der Fahrbewegung eine Verriegelung betätigt wird und ein Hochdruck über ein Hydrauliksystem aufgebaut wird. Bei der vorliegenden Erfindung kann vorteilhaft auf die Verriegelung verzichtet werden.

Weiter vorteilhaft hinsichtlich Verschließ und Wartungsaufwänden komplexer Kniehebelsysteme wird in der vorliegenden Erfindung auf die Verwendung von Kniehebelkomponenten verzichtet.

Mittels des Antriebs, bevorzugt eines elektrischen Antriebs, wird die Hauptfahrbewegung der beweglichen Formaufspannplatte realisiert. Beispielsweise wird bei einem Schließen der Formschließeinheit die bewegliche Formaufspannplatte in Richtung der ersten Formaufspannplatte gefahren. Kurz vor Anlage der Formhälften wird die Fahrbewegung, bevorzugt die elektrische Fahrbewegung des Antriebs abgeschaltet und der Druck wird über das Verschieben des Hydraulikkolbens und das Element des Antriebs, bevorzugt des ganzen Antriebs aufgebaut. Über diese Parallelgestaltung einer (elektrischen) Fahreinrichtung und einer hydraulischen Druck- und/oder Fahreinrichtung kann vorteilhaft gänzlich auf eine Kniehebelkinematik sowie auf eine Formhöhenverstellung verzichtet werden.

Beispielsweise wird die bewegliche Formaufspannplatte zunächst mittels des Antriebs, bevorzugt eines elektrischen Antriebs wie z.B. eines Spindelantriebs oder eines Zahnstangenantriebs, nahe an die erste Formaufspannplatte herangefahren. Kurz bevor die Formhälften der beweglichen und der ersten Formaufspannplatte aneinander zu liegen kommen, wird der Antrieb abgeschaltet und der restliche Weg als auch der Druck auf die Form mittels der Hydraulikeinrichtung gefahren bzw. aufgebracht.

Ein weiterer Vorteil ist, dass aufgrund von hydraulischem Druck, z.B. Hochdruck, auf die exakte Anpassung der Formhöhe über eine Formhöhenverstellung verzichtet werden kann. Die Formhöhenverstellung ist bevorzugt im Antrieb, z.B. einem Spindelantrieb integriert. Beispielsweise kann über die Länge des Antriebssystems, z.B. eines Spindelsystems der Hub und die klassische Formhöhenverstellung realisiert werden. Somit kann vorteilhaft neben der Kniehebelkinematik auch auf die Formhöhenverstellung verzichtet werden.

Die vorliegende Erfindung macht sich die statische Tragkraft des eingesetzten Antriebs, zum Beispiel eines Spindelantriebs, zu Nutzen. Die Auslegung des Antriebs ist so konzipiert, dass neben der Fahrdynamik auch die eigentliche Schließkraft über den Antrieb, zum Beispiel über die Spindel, übertragen werden kann, ohne dass der Antrieb und das gesamte System Schaden nimmt. Da es sich um einen quasi statischen Prozess handelt, weil sich z.B. die Spindel zum Zeitpunkt der Kraftübertragung nicht rotativ bewegt, kann die weitaus höhere statische Tragzahl der Spindel (gegenüber der niedrigeren dynamischen Tragzahl) zur Auslegung der Komponenten herangezogen werden.

Besitzt ein Spindelsystem z.B. keine Selbsthemmung, das heißt, wird von außen eine Kraft auf das System (z.B. über einen hydraulischen Druckaufbau) aufgebracht, möchte sich das System rückwärts drehen. Diese Rückdrehbewegung könnte unter Verwendung des Motors des Antriebs eliminiert werden, was jedoch eine energetisch unzureichende Lösung darstellt. Daher wird stattdessen die Arretierung verwendet.

Bevorzugt ist das Element des Antriebs, z.B. eine Spindelmutter oder ein Zahnstangengetriebe, so ausgestaltet, dass es bei einer Druckbeaufschlagung des Hydraulikkolbens formschlüssig mit der Arretierung zusammenwirkt. Beispielsweise kann die Arretierung als eine Ausnehmung in der Abstützplatte ausgeführt sein, welche von einem entsprechenden Gegenstück des Elements bei einer Druckbeaufschlagung formschlüssig ausgefüllt wird. Die mechanische Ausgestaltung erlaubt vorteilhaft einen Hub zu fahren, bevorzugt elektrisch zu fahren, und in einer vorderen Position, in der die Formhälften nahe beieinander sind, ohne Betätigung einer Verriegelung mit dem hydraulischen System den Druck aufzubauen. Vorteilhaft kann dadurch Zykluszeit gespart werden, da keine Verriegelung betätigt werden muss. Beispielsweise bewegt der Hydraulikkolben bei einer Druckbeaufschlagung das Element des Antriebs und das Bewegungselement des Antriebs in Richtung der ersten Formaufspannplatte und baut einen entsprechenden Druck auf, wobei das Element des Antriebs formschlüssig mit der Arretierung zusammenwirkt. Erfolgt ein Druck auf das Bewegungselement in entgegengesetzter Richtung, wird durch das Zusammenwirken von Element und Bewegungselement des Antriebs das Element des Antriebs veranlasst, eine Bewegung durchzuführen, welche jedoch durch das formschlüssige Zusammenwirken mit der Arretierung gehemmt wird. Die bewegliche Formaufspannplatte bzw. deren Bewegung ist somit vorteilhaft gesichert.

Vorteilhaft hinsichtlich einer Minimierung der erreichbaren Zykluszeit ist bevorzugt das Element des Antriebs ausgestaltet, um bei einer Druckbeaufschlagung des Hydraulikkolbens wenigstens teilweise in die Arretierung einzufahren, weiter bevorzugt um bei einer Druckbeaufschlagung des Hydraulikkolbens formschlüssig wenigstens teilweise in die Arretierung einzufahren. Beispielsweise kann die Abstützplatte als Arretierung eine Ausnehmung aufweisen, in welche das Element des Antriebs bei einer Druckbeaufschlagung des Hydraulikkolbens, bevorzugt zur formschlüssig Wirkverbindung, einfährt. Es muss lediglich dafür gesorgt werden, dass eine lagerichtige Position der Bewegung gegeben ist, damit das Element des Antriebs bevorzugt formschlüssig in die Arretierung eingefahren werden kann. Dies kann beispielsweise über geeignete Sensoren und/oder über gelagerte Fahrprofile realisiert werden, indem eine übergangsfreie Umschaltung der beiden Fahrprofile, z.B. elektrisch, hydraulisch realisiert wird, was vorteilhaft gegenüber den verriegelungsbehafteten Systemen bzgl. der erreichbaren Zykluszeit erhebliche Vorteile bringt. Weiter bevorzugt ist das Fahrprofil dem eines Kniehebelformschlusses nachempfunden, wodurch sich Vorteile hinsichtlich der eingesetzten Werkzeugtechnik ergeben.

Bevorzugt ist die Arretierung als eine Ruckdrehsicherung, zum Beispiel als eine 4-Kant-, 6-Kant-, 8-Kant-, eine Polygonzug-Rückdrehsicherung oder als wenigstens ein Bolzen ausgeführt, der in wenigstens eine entsprechende Bohrungen eintaucht. Vorteilhaft ergibt sich so eine einfache und stabile Sicherung.

Bevorzugt ist das wenigstens eine Bewegungselement des Antriebs ein Kraftübertragungselement, welches wenigstens eine Kraft auf die bewegliche Formaufspannplatte überträgt. Die Schließkraft wird so über das Bewegungselement, z.B. eine Spindel oder eine Zahnstange, übertragen. Vorteilhaft kann so zur Auslegung der Komponenten die höhere statische Tragzahl des Kraftübertragungselements (gegenüber der niedrigeren dynamischeren Tragzahl) herangezogen werden, wodurch sich Vorteile hinsichtlich der Stabilität und Belastung ergeben. Weiter vorteilhaft wird somit lediglich ein Element benötigt, welches sowohl für die Bewegung als auch für die Kraftübertragung zuständig ist.

Vorteilhaft für eine größtmögliche Kraftübertragung steht bevorzugt das Kraftübertragungselement während der Kraftübertragung still. Ist beispielsweise das Kraftübertragungselement als eine Spindel ausgeführt, dreht sich die Spindel bei der Kraftübertragung im Wesentlichen nicht.

Bevorzugt ist die Bewegung der beweglichen Formaufspannplatte während dem Öffnen und/oder dem Schließen der Formschließeinheit eine fließende Bewegung. Mit einer fließenden Bewegung ist das Zusammenspiel von Vorschubbewegung des Antriebs in Kombination mit der hydraulischen Druckbewegung gemeint. Beispielsweise wird die bewegliche Formaufspannplatte zunächst mittels des Antriebs auf die erste Formaufspannplatte zu bewegt, wobei ein direktes Umschalten, ohne ein Absetzen oder Stoppen der Bewegung, auf die Hydraulikeinheit erfolgt, welche die Formhälften schließt und den Druck auf die Formhälften aufbringt.

Bevorzugt ist das wenigstens eine Bewegungselement, z.B. eine Spindel oder eine Zahnstange, drehfest mit der beweglichen Formaufspannplatte verbunden. Vorteilhaft kann so eine weitaus höhere statische Tragzahl des Kraftübertragungselements bzw. des Bewegungselements herangezogen werden.

Bevorzugt ist das Element des Antriebs bei einem Druck entgegen der Richtung der Schließbewegung der Formschließeinheit durch die Arretierung rücklaufgesichert und/oder rückdrehgesichert. Vorteilhaft ergibt sich so eine einfache und kostengünstige Formschließeinheit, da auf eine Sicherung mit vielen zusätzlichen Komponenten verzichtet werden kann.

Bevorzugt ist der Antrieb ein Spindelantrieb oder ein Zahnstangenantrieb, das Element in dem Hydraulikkolben eine Spindelmutter oder ein Zahnstangengetriebe und/oder das Bewegungselement und das Kraftübertragungselement eine Spindel oder eine Zahnstange.

Weiter bevorzugt ist die Arretierung austauschbar. In der Arretierung wird durch die translatorische Hubbewegung, verursacht durch die Kolbenbewegung der Hydraulikeinheit, bei gleichzeitiger Verhinderung der Drehbewegung eine lastbeaufschlagte Kontaktstelle erzeugt. Um vorteilhaft Verschleiß zu minimieren, ist die Arretierung z.B. als eine Einbaukomponente ausgeführt, die sich weiter vorteilhaft wartungsfreundlich austauschen lässt. Beispielsweise kann es sich bei der austauschbaren Arretierung um ein hinsichtlich des verwendeten Materials weicheres Teil gegenüber dem Element des Antriebs handeln, welches einfach gewechselt werden kann. Auch denkbar ist z. B. eine federgelagerte Arretierung, bei der nach einer gewissen Zeit die Federn gewechselt werden.

Die Aufgabe wird zudem durch ein Verfahren zum Betreiben einer Formschließeinheit einer Maschine zur Verarbeitung von Kunststoffen und anderer plastifizierbarer Massen, insbesondere einer Spritzgießmaschine mit den Merkmalen des Anspruches 11 gelöst. Die bewegliche Formaufspannplatte wird mittels des Antriebs oder des Antriebs und der Hydraulikeinheit bewegt und es wird wenigstens ein Druck auf die bewegliche Formaufspannplatte mittels der Hydraulikeinheit aufgebracht. In der Abstützplatte ist wenigstens ein Hydraulikkolben der Hydraulikeinheit angeordnet, in dem wenigstens ein Element des Antriebs gedreht und/oder bewegt wird. Das Element wirkt mit wenigstens einem Bewegungselement des Antriebs zusammen, das mit der beweglichen Formaufspannplatte verbunden ist. Weiter wirkt wenigstens eine Arretierung, welche in oder an der Abstützplatte angeordnet ist, mit dem wenigstens einen Element zusammen. Somit ergeben sich Vorteile im Hinblick auf Wartung und Verschleiß. Weiter vorteilhaft kann auf eine Verriegelung sowie auf eine Formhöhenverstellung verzichtet werden.

Bevorzugt wirkt bei einer Druckbeaufschlagung des Hydraulikkolbens das Element des Antriebs formschlüssig mit der Arretierung zusammen. Vorteilhaft ergibt sich so eine erhöhte Produktivität, da Zykluszeit gespart werden kann, weil keine Verriegelung extra betätigt werden muss.

Für einen vorteilhaft einfachen Aufbau und sicheren Betrieb der Formschließeinheit fährt bevorzugt bei einer Druckbeaufschlagung des Hydraulikkolbens das Element des Antriebs wenigstens teilweise in die Arretierung ein. Weiter bevorzugt fährt bei einer Druckbeaufschlagung des Hydraulikkolbens das Element des Antriebs formschlüssig wenigstens teilweise in die Arretierung ein. Dadurch ist das Element des Antriebs in der Arretierung gesichert, wobei der Sicherungsvorgang in die Schließbewegung der Formschließeinheit integriert ist.

Bevorzugt wird bei einer Druckbeaufschlagung des Hydraulikkolbens das Element des Antriebs rückdrehgesichert und/oder rücklaufgesichert. Vorteilhaft ergibt sich so eine hohe Sicherheit bei einem einfachem Aufbau der Formschließeinheit.

Um vorteilhaft die statische Tragkraft des eingesetzten Antriebs, zum Beispiel eines Zahnstangenantriebs oder eines Spindelantriebs, zu nutzen, wird bevorzugt mit dem wenigstens einen Bewegungselement als ein Kraftübertragungselement wenigstens eine Kraft auf die bewegliche Formaufspannplatte übertragen. Die Auslegung des Antriebs ist z.B. so konzipiert, dass neben der Fahrdynamik auch die eigentliche Schließkraft über den Antrieb, zum Beispiel über die Spindel übertragen werden kann, ohne dass der Antrieb und das gesamte System Schaden nimmt. Da es sich um einen quasi statischen Prozess handelt, da sich z.B. die Spindel zum Zeitpunkt der Kraftübertragung nicht rotativ bewegt, kann die weitaus höhere statische Tragzahl der Spindel (gegenüber der niedrigeren dynamischen Tragzahl) zur Auslegung der Komponenten herangezogen werden.

Bevorzugt wird die bewegliche Formaufspannplatte während dem Öffnen und/oder dem Schließen der Formschließeinheit in einer fließenden Bewegung bewegt. Vorteilhaft ergibt so sich eine Zeitersparnis, da die Bewegung nicht angehalten werden muss, um beispielsweise die Formschließeinheit zu sichern. Unter einer fließenden Bewegung wird das Zusammenspiel von Vorschubbewegung des Antriebs in Kombination mit der hydraulischen Druckbewegung verstanden. Beispielsweise wird die bewegliche Formaufspannplatte zunächst mittels des Antriebs auf die erste Formaufspannplatte zu bewegt, wobei ein direktes Umschalten, ohne ein Absetzen oder Stoppen der Bewegung, auf die Hydraulikeinheit erfolgt, welche die Formhälften schließt und den Druck auf die Formhälften aufbringt.

Weitere Vorteile ergeben sich aus den Unteransprüchen und der nachfolgenden Beschreibung eines bevorzugten Ausführungsbeispiels. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

### Kurzbeschreibung der Figuren

Im Folgenden wird die Erfindung an Hand von in den beigefügten Figuren dargestellten Ausführungsbeispielen näher erläutert. Es zeigen
- Figur 1: isometrische Ansicht einer Maschine zur Verarbeitung von Kunststoffen und anderer plastifizierbarer Massen mit einer Formschließeinheit (Werkzeug geschlossen),
- Figur 2: vertikaler Schnitt durch die Maschinenlängsachse,
- Figur 3: Schnitt entlang der Achse B-B gemäß Fig. 2,
- Figur 4: isometrische, teilweise geschnittene Ansicht einer Formschließeinheit ohne Druckbeaufschlagung des Hydraulikkolbens,
- Figur 5: Detailansicht des Ausschnitts F gemäß Fig. 4,
- Figur 6: isometrische, teilweise geschnittene Ansicht einer Formschließeinheit mit Druckbeaufschlagung des Hydraulikkolbens (Werkzeug geschlossen),
- Figur 7: Detailansicht des Ausschnitts E gemäß Fig. 6,
- Figur 8: Fahrprofil der beweglichen Formaufspannplatte.

### Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

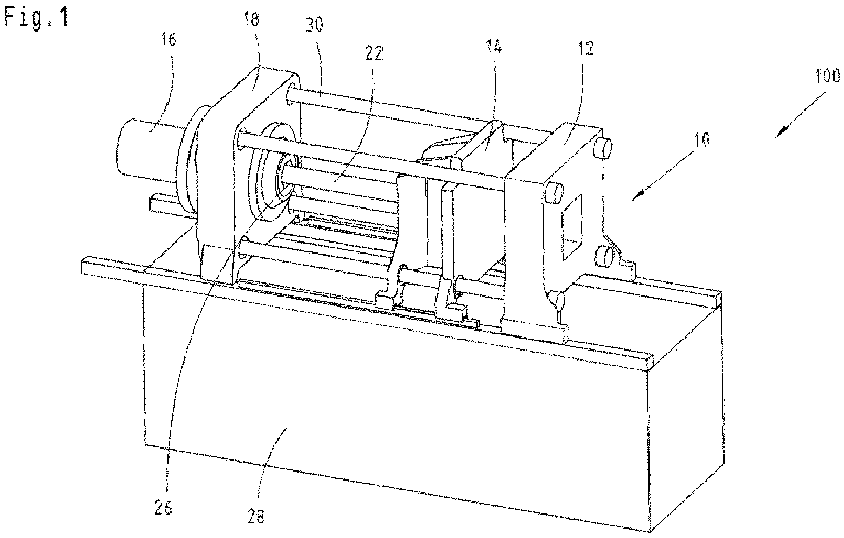

Im Ausführungsbeispiel der Fig. 1 - 7 ist eine Maschine 100 zur Verarbeitung von Kunststoffen und anderer plastifizierbarer Massen, insbesondere eine Spritzgießmaschine, dargestellt. Die Maschine weist z.B. in Fig. 1 auf der rechten Seite eine (nicht dargestellte) Einspritzeinheit und auf der linken Seite eine Formschließeinheit 10 mit einem Formraum A für eine Form 34 auf. Bei der Einspritzeinheit kann es sich um eine beliebige Einspritzeinheit, z.B. um eine Einspritzeinheit für eine Spritzgießmaschine handeln. Die Einspritzeinheit und/oder die Formschließeinheit 10 können auf einem Maschinenständer 28 angeordnet sein.

Die Formschließeinheit 10 weist eine erste Formaufspannplatte 12, im Ausführungsbeispiel gemäß den Figuren 1 - 7 eine stationäre Formaufspannplatte 12, eine Abstützplatte 18, eine bewegliche Formaufspannplatte 14, wenigstens einen Antrieb 16, bevorzugt einen elektrischen Antrieb und wenigstens eine (nicht dargestellte) Hydraulikeinheit auf.

Weiter weist die Formschließeinheit 10 in den Figuren 1 - 7 Holme 30 zur Verbindung der Abstützplatte 18 und der ersten Formaufspannplatte 12 auf. Mittels des Antriebs 16 oder mittels des Antriebs 16 und der Hydraulikeinheit wird die bewegliche Formaufspannplatte 14 bewegt. Mittels der Hydraulikeinheit kann wenigstens ein Druck auf die bewegliche Formaufspannplatte 14 aufgebracht werden. Vorteilhaft im Hinblick auf Wartung, Verschleiß sowie für einen reduzierten Aufwand und einen einfachen Aufbau ist in der Abstützplatte 18 wenigstens ein Hydraulikkolben 20 der Hydraulikeinheit angeordnet, in dem wenigstens ein Element 24 des Antriebs 16 über Lager 32 drehbar und bewegbar angeordnet ist, welches mit wenigstens einem Bewegungselement 22 des Antriebs 16 zusammenwirkt, das mit der beweglichen Formaufspannplatte 14 verbunden ist, und wobei die Abstützplatte 18 weiter wenigstens eine mit dem wenigstens einen Element 24 zusammenwirkende Arretierung 26 aufweist.

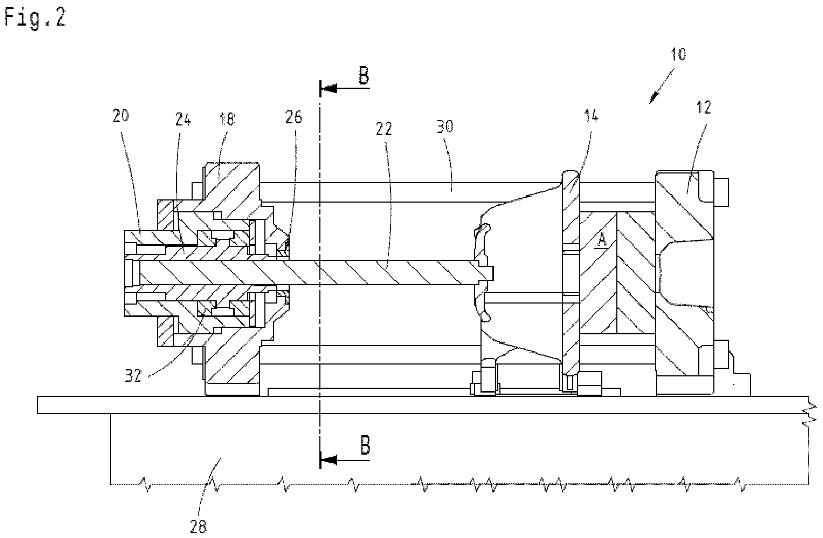

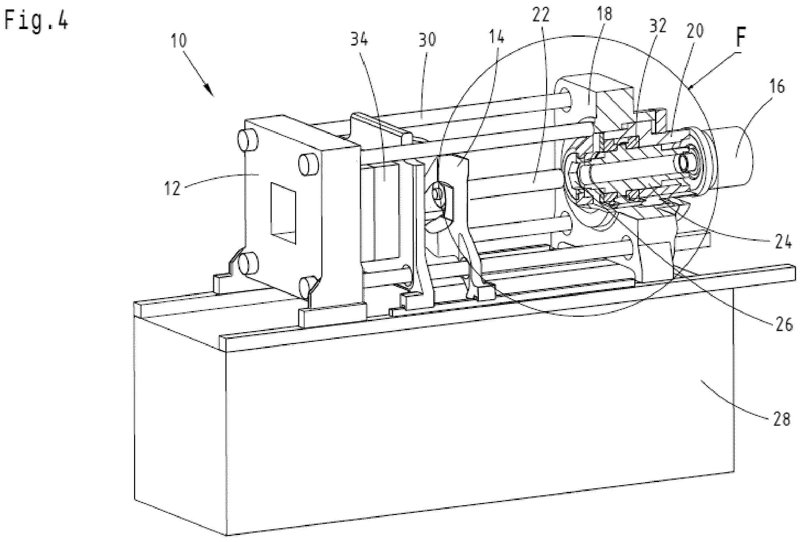

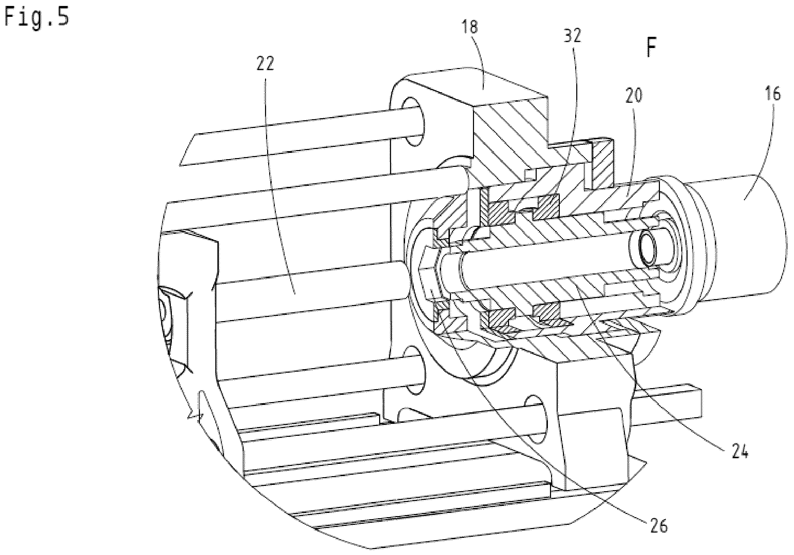

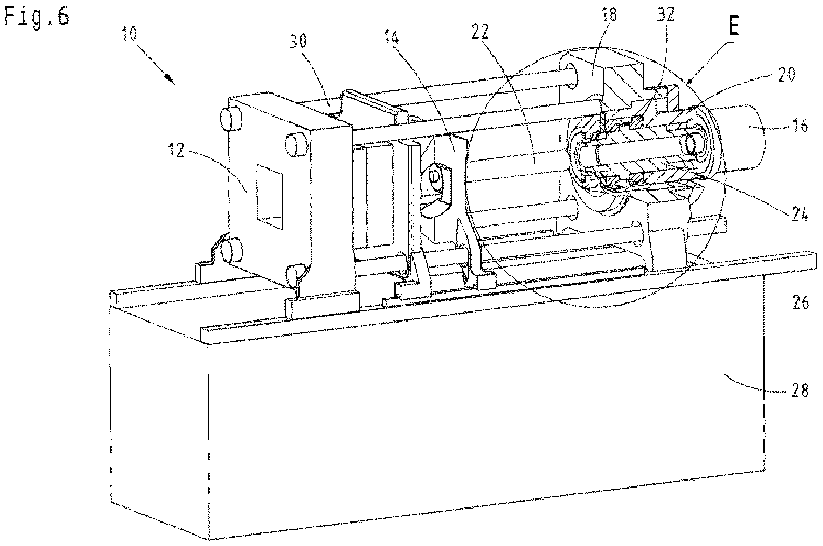

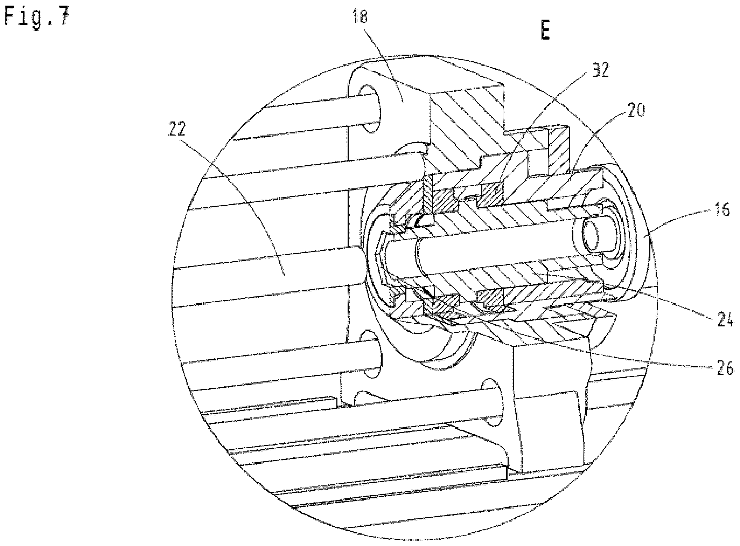

Bei einer Druckbeaufschlagung des Hydraulikkolbens 20 wirkt das Element 24 des Antriebs 16 formschlüssig mit der Arretierung 26 zusammen. Beispielsweise ist in den Fig. 2, 4 und 5 die bewegliche Formaufspannplatte 14 schon sehr nahe an die erste Formaufspannplatte 12 herangefahren, jedoch wurde der Hydraulikkolben 20 noch nicht mit Druck beaufschlagt. Wird der Hydraulikkolben 20 mit Druck beaufschlagt, bewegt sich der Hydraulikkolben 20 und das darin angeordnete Element 24 des Antriebs 16 als auch das Bewegungselement 22 des Antriebs 16 ein Stück in Richtung der ersten Formaufspannplatte 12, in Fig. 2 nach rechts bzw. in den Fig. 4 und 5 nach links. Das Element 24 wird durch diese Druckbeaufschlagung so bewegt, dass es mit der Arretierung 26 formschlüssig zusammenwirken kann (Fig. 6 und 7). Möchte sich nun die bewegliche Formaufspannplatte 14 und das Bewegungselement 22 aufgrund eines Drucks in Richtung der Abstützplatte 18 bewegen, kommt es aufgrund des Zusammenwirkens von Bewegungselement 22 und Element 24 dazu, dass sich das Element 24 bewegen und/oder drehen möchte, jedoch das Element 24 nun mit der Arretierung 26 formschlüssig zusammenwirkt, wodurch die Bewegung und/oder Drehung des Elements 24 gehemmt wird. Die Formschließeinheit 10 ist somit gegen ein Rückbewegen und/oder Rückdrehen aufgrund von Prozesskräften gesichert.

Weiter ist in den Fig. 1 - 7 das Element 24 des Antriebs 16 so ausgestaltet, dass es bei einer Druckbeaufschlagung des Hydraulikkolbens 20 formschlüssig wenigstens teilweise in die Arretierung 26 einfährt. Fig. 2 stellt einen vertikalen Schnitt entlang der Maschinenlängsachse dar. Wird die Formschließeinheit 10 geschlossen, wird mittels des Antriebs 16 das Element 24, z.B. eine Spindelmutter, angetrieben, welches wiederum ein Bewegungselement 22, z.B. eine Spindel, antreibt. Das Element 24 wird durch den Antrieb 16 angetrieben, z.B. gedreht, wodurch das Bewegungselement 22 und die damit befestigte bewegliche Formaufspannplatte 14 eine Bewegung auf die erste Formaufspannplatte 12 durchführt. Kurz bevor die Formhälften der Form 34 aneinander anliegen. wird der Antrieb 16 abgeschaltet und die Hydraulikeinheit mit wenigstens einem Druck beaufschlagt. Dadurch bewegt sich der Hydraulikkolben 20 mit dem Element 24 in Richtung der ersten Formaufspannplatte 12 und das Element 24 fährt in die Arretierung 26 der Abstützplatte 18 formschlüssig ein (Fig. 4 - 7).

Wird die Formschließeinheit 10 geöffnet, bewegt sich der Hydraulikkolben 20 in die andere Richtung, sodass das Element 26 nicht mehr formschlüssig in der Arretierung 26 der Abstützplatte 18 sitzt. Nun kann das Element 24 wieder durch den Antrieb 16 angetrieben werden, z.B. in die andere Richtung gedreht werden, wodurch das Bewegungselement 22 und die damit befestigte beweglich Formaufspannplatte 14 sich auf die Abstützplatte 18 zu bewegen. In den Fig. 4 - 7, insbesondere in den Ausschnitten E und F (Fig. 5 und 7), ist das Element 26 sowie der Hydraulikkolben 20 ohne Druckbeaufschlagung des Hydraulikkolbens 20 (Fig. 5) und mit Druckbeaufschlagung des Hydraulikkolbens 20 (Fig. 7) dargestellt. In Fig. 7 ist das Element 24 formschlüssig in die Arretierung 26 eingefahren. Vorteilhaft kann so auf eine Verriegelung verzichtet werden. In diesem Zustand kann das Element 24 nicht durch den Antrieb 16 angetrieben werden, da es durch die Arretierung 16 gehemmt ist. In gleicher Weise kann ebenfalls das Bewegungselement 22 nicht bewegt werden, da eine Bewegung des Bewegungselements 22 zu einer Betätigung des Elements 24 führen würde, welches jedoch durch die Arretierung 26 gehemmt ist.

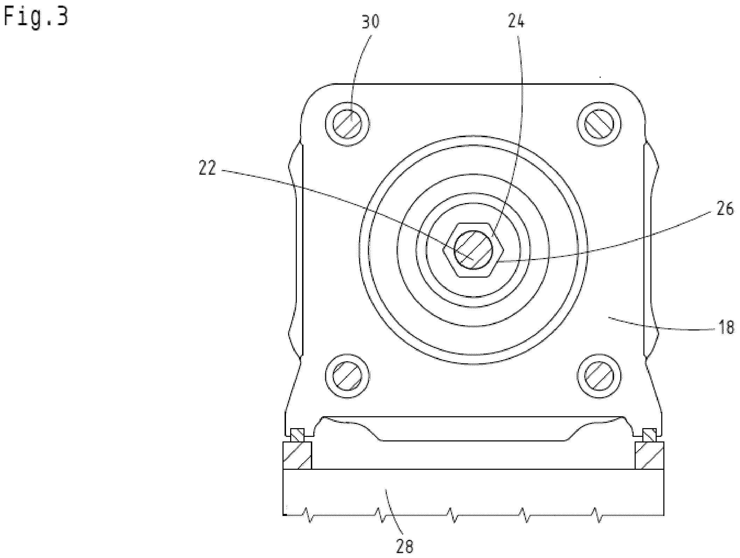

Die Arretierung 26 ist in den Fig. 1 - 7 als eine Rückdrehsicherung ausgeführt. Fig. 3 stellt einen Schnitt entlang der Achse B - B gemäß Fig. 2 dar. In den Fig. 1 - 7 ist die Rückdrehsicherung beispielsweise als eine 6-Kant-Rückdrehsicherung ausgeführt. Prinzipiell sind jedoch auch andere Ausführungen der Rückdrehsicherung denkbar z.B. als ein 4-Kant, 8-Kant, ein Polygonzug oder als Bolzen, die in Bohrungen eintauchen.

Das Bewegungselement 22 ist als ein Kraftübertragungselement ausgeführt, welches wenigstens eine Kraft auf die bewegliche Formaufspannplatte 14 überträgt. Beispielsweise wird in Fig. 1 - 7 als Bewegungs- 22 und Kraftübertragungselement eine Spindel verwendet. Prinzipiell denkbar ist aber auch die Verwendung z.B. einer Zahnstange oder anderer Elemente, die zur Umwandlung einer Rotation in eine Translation herangezogen werden können.

Wird die Formschließeinheit 10 geschlossen, bewegt sich die bewegliche Formaufspannplatte 14 auf die erste Formaufspannplatte 12 zu, wobei die Bewegung der beweglichen Formaufspannplatte 14 während dem Öffnen und/oder dem Schließen der Formschließeinheit 10 eine fließende Bewegung ist. Unter einer fließenden Bewegung ist hier gemeint, dass diese Bewegung ein Zusammenspiel und eine Kombination der Vorschubbewegung des Antriebs 16, z.B. eines Spindelantriebs, mit der hydraulischen Druckbewegung der Hydraulikeinheit ist. Fließend bedeutet dabei auch, dass zwischen dem Umschalten der Bewegung mittels des Antriebs 16 und der Druckbewegung der Hydraulikeinheit kein Absetzen oder Stoppen der Bewegung erfolgt, sondern dass die Bewegung in einem Zug ohne ein Absetzen erfolgt. Dabei kann die Bewegung der beweglichen Formaufspannplatte 14 wenigstens ein Geschwindigkeitsprofil aufweisen. Beispielsweise kann die Bewegung mittels des Antriebs 16 relativ schnell erfolgen, während die Druckbewegung der Hydraulikeinheit im Vergleich langsamer erfolgt.

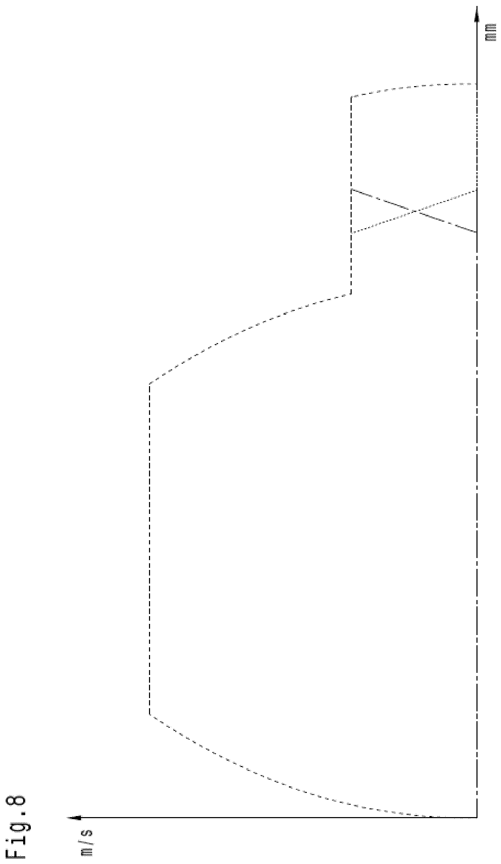

Fig. 8 zeigt ein entsprechendes Fahrprofil einer fließenden Bewegung und einen kontinuierlichen Bewegungsablauf der beweglichen Formaufspannplatte 14, wobei vorteilhaft das, z.B. aus der Welt der 2-Plattenmaschinen, bekannte Stoppen und Verriegeln entfällt. Die Vorschubbewegung des Antriebs 16, z.B. eine elektrische Bewegung, wird ohne Unterbrechung an die hydraulische Kraftaufbaubewegung übergeben. In Fig. 8 ist die Geschwindigkeit in m/s über der Position in mm der beweglichen Formaufspannplatte 14 aufgetragen. Zunächst steigt die Geschwindigkeit der Vorschubbewegung mittels des Antriebs 16 an, welche über eine bestimmte Zeit konstant gehalten wird. Ab einem bestimmten Zeitpunkt wird die Bewegung abgebremst, woraus eine geringe Geschwindigkeit resultiert. Nach einer Zeit wird der Antrieb 16 (gepunktete Linie in Figur 8) abgeschalten, während die Druckbewegung der Hydraulikeinheit (strichpunktierte Linie in Figur 8) gestartet wird. Beispielsweise kann der Start der hydraulischen Bewegung zum gleichen Zeitpunkt geschehen, in dem der Antrieb 16 abgeschalten wird. Liegt eine Kraft an der beweglichen Formaufspannplatte 14 an, wird die Bewegung weiter verlangsamt, bis diese schließlich auf null ist. Vorteilhaft kann somit die klassische Bewegungskinematik von einem Kniehebelantrieb nachempfunden werden, wobei die etablierten werkzeugschonenden Bewegungsabläufe integriert sind.

Das Bewegungselement 22 ist in den Fig. 1 - 7 drehfest mit der beweglichen Formaufspannplatte 14 verbunden.

Bei einem Druck entgegen der Richtung der Schließbewegung der Formschließeinheit 10 ist in den Fig. 1 - 7 das Element 24 des Antriebs 16 durch die Arretierung 26 rücklaufgesichert und/oder rückdrehgesichert.

Weiter ist in den Fig. 1 - 7 der Antrieb 16 ein Spindelantrieb und das Element 24 in dem Hydraulikkolben 20 eine Spindelmutter sowie das Bewegungselement 22 und das Kraftübertragungselement eine Spindel. Prinzipiell möglich ist auch, dass der Antrieb 16 ein Zahnstangenantrieb, das Element 24 ein Zahnstangengetriebe und das Bewegungselement 22 und das Kraftübertragungselement eine Zahnstange sind.

Weiter kann die Arretierung 26 in den Fig. 1 - 7 in einem weiteren Ausführungsbeispiel austauschbar sein. Die translatorische Hubbewegung, welche durch die Kolbenbewegung der Hydraulikeinheit bei gleichzeitiger Verhinderung der Drehbewegung verursacht wird, erzeugt eine lastbeaufschlagte Kontaktstelle. Um Verschleiß zu minimieren, kann die Arretierung 26 z.B. als eine Einbaukomponente ausgeführt sein, die sich vorteilhaft wartungsfreundlich austauschen lässt. Beispielsweise kann es sich bei der Arretierung 26 um ein gegenüber dem Element 24 des Antriebs 16 weicheres Teil handeln. Auch denkbar ist, dass die Arretierung 26 eine federgelagerte Arretierung ist, wobei die Federn entsprechend ausgewechselt werden können.

### Bezugszeichenliste

- 10: Formschließeinheit
- 12: erste Formaufspannplatte
- 14: bewegliche Formaufspannplatte
- 16: Antrieb
- 18: Abstützplatte
- 20: Hydraulikkolben
- 22: Bewegungselement
- 24: Element
- 26: Arretierung
- 28: Maschinenständer
- 30: Holm
- 32: Lager
- 34: Form
- A: Formraum
- B-B: Achse
- E: Ausschnitt
- F: Ausschnitt

## Patentansprüche

1. Formschließeinheit (10) für eine Maschine (100) zur Verarbeitung von Kunststoffen und anderer plastifizierbarer Massen, insbesondere für eine Spritzgießmaschine, aufweisend eine erste Formaufspannplatte (12), eine Abstützplatte (18), eine bewegliche Formaufspannplatte (14), wenigstens einen Antrieb (16) und wenigstens eine Hydraulikeinheit, wobei der Antrieb (16) oder der Antrieb (16) und die Hydraulikeinheit die bewegliche Formaufspannplatte (14) bewegen und die Hydraulikeinheit wenigstens einen Druck auf die bewegliche Formaufspannplatte (14) aufbringt,
**dadurch gekennzeichnet, dass** in der Abstützplatte (18) wenigstens ein Hydraulikkolben (20) der Hydraulikeinheit angeordnet ist, in dem wenigstens ein Element (24) des Antriebs (16) drehbar und/oder bewegbar angeordnet ist, welches mit wenigstens einem Bewegungselement (22) des Antriebs (16) zusammenwirkt, das mit der beweglichen Formaufspannplatte (14) verbunden ist, und dass die Abstützplatte (18) wenigstens eine mit dem wenigstens einen Element (24) zusammenwirkende Arretierung (26) aufweist.

2. Formschließeinheit nach Anspruch 1, **dadurch gekennzeichnet, dass** das Element (24) des Antriebs (16) so ausgestaltet ist, dass es bei einer Druckbeaufschlagung des Hydraulikkolbens (20) formschlüssig mit der Arretierung (26) zusammenwirkt und/oder wenigstens teilweise in die Arretierung (26) einfährt.

3. Formschließeinheit nach Anspruch 1 oder 2, **dadurch gekennzeichnet, dass** die Arretierung (26) als eine Rückdrehsicherung ausgeführt ist.

4. Formschließeinheit nach einem der vorhergehenden Ansprüche, **dadurch gekennzeichnet, dass** das wenigstens eine Bewegungselement (22) ein Kraftübertragungselement ist, welches wenigstens eine Kraft auf die bewegliche Formaufspannplatte (14) überträgt.

5. Formschließeinheit nach Anspruch 4, **dadurch gekennzeichnet, dass** das Kraftübertragungselement während der Kraftübertragung der wenigstens einen Kraft auf die bewegliche Formaufspannplatte (14) im Wesentlichen stillsteht.

6. Formschließeinheit nach einem der vorhergehenden Ansprüche, **dadurch gekennzeichnet, dass** die Bewegung der beweglichen Formaufspannplatte (14) während dem Öffnen und/oder dem Schließen der Formschließeinheit (10) eine fließende Bewegung ist.

7. Formschließeinheit nach einem der vorhergehenden Ansprüche, **dadurch gekennzeichnet, dass** das wenigstens eine Bewegungselement (22) drehfest mit der beweglichen Formaufspannplatte (14) verbunden ist.

8. Formschließeinheit nach einem der vorhergehenden Ansprüche, **dadurch gekennzeichnet, dass** das Element (24) des Antriebs (16) bei einem Druck entgegen der Richtung der Schließbewegung der Formschließeinheit (10) durch die Arretierung (26) rücklaufgesichert und/oder rückdrehgesichert ist.

9. Formschließeinheit nach einem der vorhergehenden Ansprüche, **dadurch gekennzeichnet, dass** der Antrieb (16) ein Spindelantrieb oder ein Zahnstangenantrieb, das Element (24) in dem Hydraulikkolben (20) eine Spindelmutter oder ein Zahnstangengetriebe und/oder das Bewegungselement (22) und das Kraftübertragungselement eine Spindel oder eine Zahnstange ist.

10. Formschließeinheit nach einem der vorhergehenden Ansprüche, **dadurch gekennzeichnet, dass** die Arretierung (26) austauschbar ist.

11. Verfahren zum Betreiben einer Formschließeinheit (10) einer Maschine (100) zur Verarbeitung von Kunststoffen und anderer plastifizierbarer Massen, insbesondere einer Spritzgießmaschine, aufweisend eine erste Formaufspannplatte (12), eine Abstützplatte (18), eine bewegliche Formaufspannplatte (14), wenigstens einen Antrieb (16) und wenigstens eine Hydraulikeinheit, wobei die bewegliche Formaufspannplatte (14) mittels des Antriebs (16) oder des Antrieb (16) und der Hydraulikeinheit bewegt wird und wenigstens ein Druck auf die bewegliche Formaufspannplatte (14) mittels der Hydraulikeinheit aufgebracht wird,
**dadurch gekennzeichnet, dass** in der Abstützplatte (18) wenigstens ein Hydraulikkolben (20) der Hydraulikeinheit angeordnet ist, in dem wenigstens ein Element (24) des Antriebs (16) gedreht und/oder bewegt wird, welches mit wenigstens einem Bewegungselement (22) des Antriebs (16) zusammenwirkt, das mit der beweglichen Formaufspannplatte (14) verbunden ist, und dass wenigstens eine Arretierung (26), welche in oder an der Abstützplatte (18) angeordnet ist, mit dem wenigstens einen Element (24) zusammenwirkt.

12. Verfahren nach Anspruch 11, **dadurch gekennzeichnet, dass** bei einer Druckbeaufschlagung des Hydraulikkolbens (20) das Element (24) des Antriebs (16) formschlüssig mit der Arretierung (26) zusammenwirkt und/oder wenigstens teilweise in die Arretierung (26) einfährt.

13. Verfahren nach Anspruch 11 oder 12, **dadurch gekennzeichnet, dass** bei einer Druckbeaufschlagung des Hydraulikkolbens (20) das Element (24) des Antriebs (16) rückdrehgesichert und/oder rücklaufgesichert wird.

14. Verfahren nach einem der Ansprüche 11 bis 13, **dadurch gekennzeichnet, dass** mit dem wenigstens einen Bewegungselement (22) als ein Kraftübertragungselement wenigstens eine Kraft auf die bewegliche Formaufspannplatte (14) übertragen wird.

15. Verfahren nach einem der Ansprüche 11 bis 14, **dadurch gekennzeichnet, dass** die bewegliche Formaufspannplatte (14) während dem Öffnen und/oder dem Schließen der Formschließeinheit (10) in einer fließenden Bewegung bewegt wird.
